# FASCICULE DE BREVET EUROPEEN

(11) **EP 2 033 817 B1**
(45) Date de publication et mention de la délivrance du brevet: **16.11.2011**
(21) Numéro de dépôt: 08163604.5
(22) Date de dépôt: 03.09.2008
(51) Int. Cl.: B60D 1/54, B60D 1/58, B62D 25/12

(54) **Système de blocage de l'ouverture d'un ouvrant arrière de véhicule automobile**
Öffnungsblockiersystem des hinteren Öffnungselements eines Kraftfahrzeugs
System for blocking the opening of an automobile rear door

(30) Priorité: 07.09.2007 FR 0757428
(43) Date de publication de la demande: 11.03.2009
(73) Titulaire: Compagnie Plastic Omnium, 69000 Lyon (FR)
(72) Inventeur: André, Gérald, 01500, AMBERIEU EN BUGEY (FR); Barral, Denis, 38390 Montalieu Vercieu (FR); Fillon, Jérôme, 43000 LE PUY EN VELAY (FR); Cheron, Hugues, 01800 MEXIMIEUX (FR); Delwal, Fabien, 01320 CHALAMONT (FR)
(74) Mandataire: Thiollier, Clémence-Olivia Laure Marie

(56) Documents cités:
- WO-A-97/37872
- DE-A1- 19 813 025
- FR-A- 2 769 880
- FR-A- 2 866 612
- US-A- 3 565 461
- US-A- 4 252 373
- US-B2- 6 863 295

## Description

La présente invention concerne le domaine des véhicules automobiles munis d'un crochet de remorquage, pouvant également être appelé crochet d'attelage, permettant au véhicule de tracter par exemple une remorque ou une caravane.

On connaît dans l'état de la technique un véhicule automobile comportant un crochet de remorquage agencé à l'arrière du véhicule, ce crochet comportant généralement une boule de remorquage. Afin de ne pas encombrer l'arrière du véhicule lorsqu'il n'est pas utilisé, et également pour des raisons esthétiques, ce crochet est généralement démontable ou escamotable. Ainsi, le crochet peut prendre une configuration de fonctionnement, dans laquelle il est apte à assurer sa fonction de remorquage, et une configuration de repos, dans laquelle il n'encombre pas, en étant par exemple camouflé en dessous du véhicule, sans faire saillie du reste du véhicule dans la direction longitudinale. Le document US2002/0113406 décrit un exemple de crochet escamotable.

La difficulté réside dans le fait que, lorsque le crochet est dans sa configuration de fonctionnement, il peut gêner l'ouverture d'un ouvrant arrière du véhicule, en particulier d'un ouvrant dont l'extrémité inférieure est à une hauteur relativement basse sur le véhicule. En conséquence, lorsque le crochet de remorquage est dans sa configuration de fonctionnement, il est susceptible d'abîmer ou de rayer l'ouvrant. Voir par exemple le document FR 2866612.

La présente invention vise à résoudre cet inconvénient en garantissant que le crochet de remorquage, lorsqu'il est dans sa configuration de fonctionnement, n'abîme pas l'ouvrant.

A cet effet, l'invention a pour objet un système de blocage de l'ouverture d'un ouvrant arrière de véhicule automobile, le véhicule comportant un crochet de remorquage agencé à l'arrière du véhicule, ce crochet pouvant prendre une configuration de fonctionnement et une configuration de repos, le système comportant des moyens de blocage de l'ouvrant lorsque le crochet est dans sa configuration de fonctionnement.

Ainsi, on propose de bloquer automatiquement l'ouvrant dès lors que le crochet est sorti. On empêche donc l'ouvrant de prendre sa position ouverte, position dans laquelle il est susceptible d'être abîmé par le crochet de remorquage. On peut envisager de bloquer l'ouvrant soit dans sa position fermée sur le véhicule soit dans une position semi-ouverte, correspondant à une position intermédiaire entre la position fermée et la position ouverte de l'ouvrant. Grâce aux moyens de blocage, on sait que, si le crochet de remorquage est dans sa configuration de fonctionnement, il n'est pas possible que l'ouvrant prenne sa position ouverte.

L'invention peut en outre comporter l'une ou plusieurs des caractéristiques suivantes :
- Les moyens de blocage sont mécaniques. Ceci permet de prévoir un fonctionnement relativement simple, par exemple une liaison mécanique entre le crochet de remorquage et les moyens de blocage, de façon que les moyens de blocage soient déclenchés par le crochet lorsqu'il est dans sa configuration de fonctionnement.
- Les moyens de blocage comprennent une pièce, ménagée sur le crochet, apte à former butée contre l'ouvrant ou un élément rapporté sur l'ouvrant et mobile avec l'ouvrant, pour empêcher l'ouvrant de prendre sa position ouverte.
- Les moyens de blocage comprennent des moyens électroniques. De tels moyens sont particulièrement aisés à mettre en oeuvre lorsque l'ouvrant arrière est motorisé, du fait que l'on peut arrêter le moteur pour bloquer l'ouvrant.
- Les moyens de blocage agissent sur une serrure de verrouillage de l'ouvrant. Ainsi, les moyens de blocage peuvent maintenir la serrure en position de verrouillage, donc l'ouvrant en position fermée, lorsque le crochet est dans sa configuration de fonctionnement. Ces moyens sont particulièrement faciles à mettre en oeuvre dans le cas où la serrure de verrouillage est commandée de façon électronique.
- Le système comporte des moyens de détection que le crochet de remorquage est dans sa configuration de fonctionnement. Ces moyens de détection, éventuellement mécaniques, permettent de déclencher les moyens de blocage.
- Les moyens de détection sont électroniques, ils comprennent par exemple un capteur, notamment optique ou à ultrasons, ou encore de type capteur PDC, émettant éventuellement un signal dirigé vers la configuration de fonctionnement du crochet. Selon un autre exemple, les moyens de détection comprennent un capteur de pression, une jauge de contrainte, ou encore un capteur de contact, capables de détecter la présence du crochet dans sa configuration de fonctionnement, éventuellement en étant ménagés sur des moyens de réception du crochet. Selon encore un autre exemple, les moyens de détection comprennent des moyens de mesure du couple de force exercé par un moteur d'ouverture de l'ouvrant, ces moyens de mesure étant aptes à déclencher les moyens de blocage si le couple est supérieur à un seuil prédéterminé, ce qui traduit qu'un obstacle, tel que le crochet, empêche l'ouverture de l'ouvrant.
- Le crochet passe de sa configuration de fonctionnement à sa configuration de repos par escamotage, par exemple à la suite d'une rotation par rapport à un axe incliné du crochet. De façon alternative, le crochet passe de sa configuration de fonctionnement à sa configuration de repos par démontage d'au moins une partie du crochet.
- L'ouvrant comporte les moyens d'absorption de chocs arrières du véhicule, notamment d'absorption de chocs de type assurance, par exemple une poutre de chocs. II est particulièrement avantageux d'utiliser le système de blocage avec un tel ouvrant, du fait que cet ouvrant, qui porte le système d'absorption de chocs du véhicule, peut s'étendre sur une hauteur particulièrement basse du véhicule, et qu'il est donc susceptible d'être gêné, donc abîmé, par le crochet de remorquage au cours de l'ouverture de l'ouvrant.
- Le système comporte des moyens "anti-crochet", aptes à empêcher le crochet de prendre sa configuration de fonctionnement si l'ouvrant n'est pas dans sa position fermée, notamment si l'ouvrant est dans sa position ouverte ou est mal fermé.

L'invention concerne également l'ensemble de ce système de blocage et de l'ouvrant présenté ci-dessus.

L'invention a également pour objet un système de blocage de l'ouverture d'un ouvrant arrière de véhicule automobile, comportant des moyens de blocage de l'ouvrant lorsqu'un obstacle situé à l'arrière du véhicule est dans une position susceptible d'abîmer l'ouvrant au cours de son ouverture. Ces moyens de blocage peuvent être déclenchés à la suite de la détection d'un obstacle à une hauteur ou une distance prédéfinie comme gênante. On comprendra que tout ce qui est décrit ci-dessus concernant les inconvénients du crochet en configuration de fonctionnement et les éventuelles caractéristiques du système de blocage est applicable à la présence d'un obstacle en général.

L'invention sera mieux comprise à la lecture de la description qui va suivre, faite uniquement à titre d'exemple, dans laquelle :
- la figure 1 est une vue schématique d'un véhicule comportant un système de blocage selon un mode de réalisation de l'invention, le crochet de remorquage étant dans sa configuration de repos ;
- la figure 2 est une vue similaire à celle de la figure 1, le crochet de remorquage étant dans sa configuration de fonctionnement.
- La figure 3 est une vue schématique arrière d'un véhicule comportant un système selon un second mode de réalisation de l'invention, le crochet de remorquage étant démonté ;
- la figure 4 est une coupe selon le plan IV-IV du véhicule de la figure 3, le crochet de démontage étant dans sa position de fonctionnement.

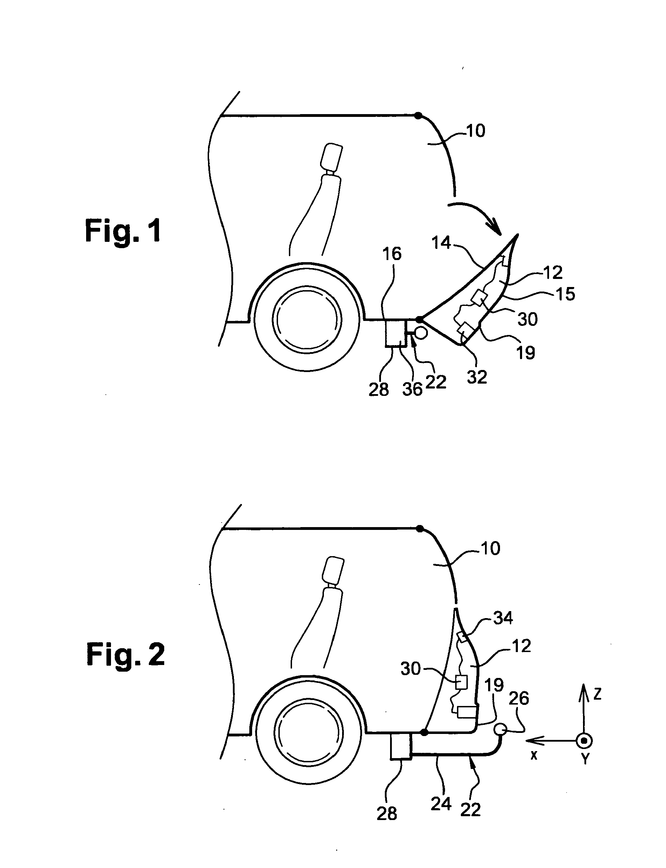

On a représenté sur les figures 1 à 4 l'arrière d'un véhicule automobile, sur lequel sont montés pivotants un ouvrant supérieur 10, à savoir un hayon, et un ouvrant inférieur 12, à savoir une ridelle. La ridelle 12 peut prendre une position fermée, visible notamment sur la figure 2, ou une position ouverte, dans laquelle un panneau intérieur 14 de la ridelle prolonge le plancher 16 du véhicule, de façon à former une surface horizontale continue avec ce plancher.

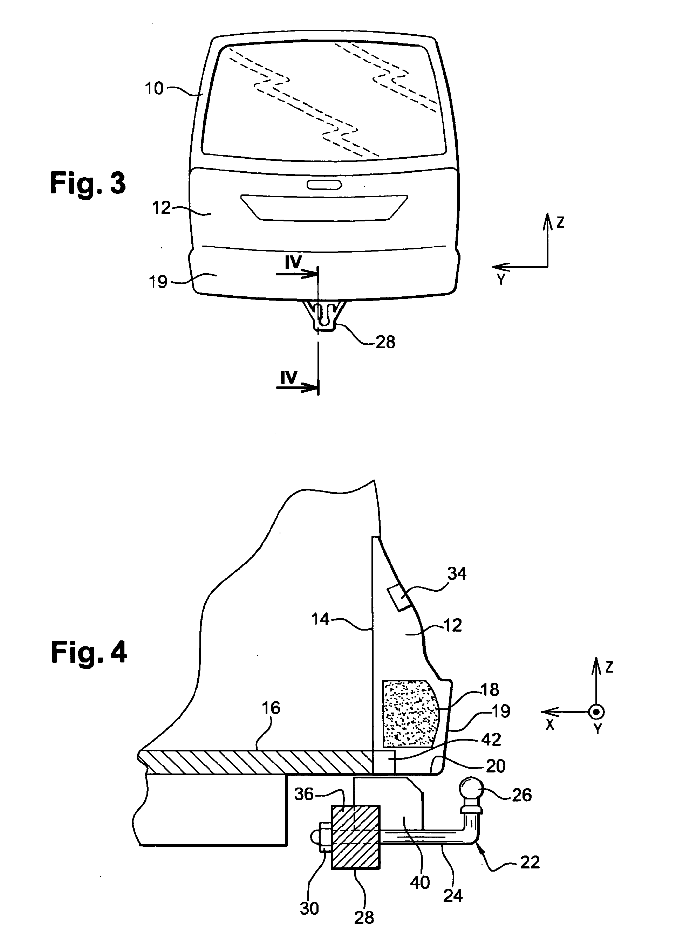

La ridelle 12 comporte les moyens d'absorption de chocs arrières du véhicule, telle qu'une poutre de chocs 18, visible sur la coupe de la figure 4, agencée entre le panneau intérieur 14 et un panneau extérieur 15, à une hauteur similaire à celle des longerons arrières du véhicule. Le panneau extérieur 15 de la ridelle 12 comporte, notamment, le bouclier (ou peau) de pare-chocs 19 arrière du véhicule, agencé face aux moyens d'absorption 18. Du fait que la ridelle 12 comporte ces moyens d'absorption, sa paroi inférieure 20 est située à une hauteur relativement basse du véhicule.

Le véhicule comporte par ailleurs un crochet de remorquage 22 agencé à l'arrière du véhicule, juste en dessous de la ridelle 12, pouvant prendre une configuration de fonctionnement, visible sur les figures 2 et 4, et une configuration de repos, visible sur les figures 1 et 3. Le crochet 22 comprend un bras coudé 24, destiné à faire saillie à l'arrière du véhicule lorsque le crochet 22 est dans sa configuration de fonctionnement, le bras 24 portant à son extrémité une boule 26 destinée à être coiffée par un moyen d'attelage prévu sur le véhicule à remorquer, de façon à pouvoir tracter ce véhicule. Le crochet 22 est reçu dans des moyens 28 de réception du crochet, reliés à la structure du véhicule, permettant d'ancrer le crochet 22 sur le véhicule.

Sur le véhicule des figures 1 et 2, le crochet 22 est escamotable, c'est-à-dire que la configuration de repos correspond à une position escamotée du crochet, visible sur la figure 1, par exemple par rotation du crochet 22 autour d'un axe incliné (afin de ne pas être gêné par le sol), permettant de dissimuler le crochet 22 sous le véhicule, de façon qu'il ne soit pas visible par un observateur dans cette configuration.

Le véhicule des figures 1 et 2 comporte des moyens 30 de blocage de la ridelle 12 lorsque le crochet 22 est dans sa configuration de fonctionnement. Dans cet exemple, les moyens 30 sont électroniques. Ils sont reliés à des moyens 32 de détection que le crochet de remorquage est dans sa configuration de fonctionnement. Dans cet exemple, les moyens 32 comprennent un capteur émettant un signal dirigé vers la configuration de fonctionnement du crochet 22, plus précisément dirigé vers la boule 26 lorsque le crochet 22 est dans sa configuration de fonctionnement, visible sur la figure 2. Les moyens de blocage 30 sont par ailleurs reliés à une serrure de verrouillage 34 de la ridelle 12, de façon qu'ils puissent agir sur cette serrure pour maintenir la ridelle 12 en position fermée lorsque le crochet 22 a été détecté par le capteur 32.

Le fonctionnement du système de blocage va à présent être décrit. II ne s'agit bien sûr que d'un exemple et de multiples variantes sont possibles.

Si un utilisateur souhaite ouvrir la ridelle 12, il agit, manuellement ou électroniquement, sur la serrure 34 afin de l'ouvrir, ce qui déclenche une étape de test, par les moyens 30, sur la présence ou non du crochet 22 dans sa configuration de fonctionnement. Cette étape de test consiste par exemple à déclencher les moyens 32 pour qu'ils émettent un signal vers la boule 26, et à effectuer des calculs de façon à déterminer si le crochet est dans sa configuration de fonctionnement.

Si le test est positif, c'est-à-dire que les moyens 32 ont détecté la présence du crochet dans sa configuration de fonctionnement, les moyens 30 agissent alors sur la serrure 34 de façon à la maintenir verrouillée.

Si le test est négatif, c'est-à-dire que le crochet 22 n'est pas dans configuration de fonctionnement, les moyens 30 agissent sur la serrure 34 pour la déverrouiller et permettre ainsi à l'utilisateur d'ouvrir la ridelle.

Eventuellement, le système de blocage comporte en outre des moyens 36, par exemple électroniques, appelés anti-crochet, empêchant automatiquement que le crochet 22 puisse prendre sa configuration de fonctionnement lorsque l'ouvrant 12 n'est pas dans sa position fermée.

Ces moyens 36 peuvent fonctionner de la façon suivante. Lorsqu'un utilisateur souhaite mettre le crochet 22 dans sa configuration de fonctionnement, les moyens 36 font un test pour déterminer si la ridelle 12 est dans sa position fermée ou non. Lors de ce test, les moyens 36 interrogent par exemple la serrure 34 pour déterminer si elle en configuration de verrouillage de la ridelle 12, traduisant que cette ridelle est fermée. Si la ridelle est effectivement fermée, les moyens 36 autorisent la sortie du crochet 22. Si la ridelle n'est pas dans sa position fermée, les moyens 36 bloquent le crochet 22 pour l'empêcher de prendre sa configuration de fonctionnement.

Le mode de réalisation du système de blocage des figures 3 et 4 est similaire à celui des figures 1 et 2. Les éléments analogues sont désignés par des références identiques.

Dans ce mode de réalisation, le crochet 22 est démontable, c'est-à-dire qu'il peut prendre une configuration de repos, dans laquelle il est hors des moyens de réception 28, en étant par exemple rangé dans un logement du coffre, et une configuration de fonctionnement, dans laquelle il est introduit dans les moyens de réception 28 et retenu à l'intérieur par un moyen de verrouillage 30, par exemple par vissage ou encliquetage. Le crochet 22 comporte, outre le bras coudé 24 et la boule 26, une pièce de blocage 40, s'étendant depuis le bras coudé 24 vers l'extrémité inférieure 20 de la ridelle 12, en étant ménagé d'un seul tenant avec le crochet 22.

Lorsque le crochet 22 est démonté, hors des moyens de réception 28, la ridelle 12 peut être ouverte de façon classique, en agissant sur la serrure 34, éventuellement par des moyens motorisés 42. Lorsque le crochet 22 est dans sa configuration de fonctionnement, visible sur la figure 4, les moyens 40 s'étendent juste en dessous de la surface 20, si bien que, lorsque l'utilisateur souhaite ouvrir la ridelle 12 de façon manuelle, les moyens 40 empêchent le mouvement de pivotement de la ridelle, et l'empêchent donc de prendre sa position ouverte.

Selon une variante, évitant que les moyens 40 exercent une force de butée trop importante sur la surface inférieure 20 de la ridelle, intéressante en particulier dans le cas où cette surface 20 est visible par un observateur extérieur du véhicule et ne comporte pas de moyens de protection, on prévoit que le moteur électrique 42, lorsqu'il doit exercer un couple moteur supérieur à un seuil prédéterminé (ce seuil étant dû à la présence des moyens de blocage 40), s'arrête automatiquement. En paramétrant un seuil relativement bas, on assure que les moyens 40 n'abîment pas la surface 20. Dans ce cas, le moteur 42 comprend des moyens de détection du crochet 22 dans sa configuration de fonctionnement, capables de mesurer une grandeur caractéristique du couple du moteur et de la comparer à une valeur prédéterminée. Cette variante peut être combinée au fonctionnement du paragraphe précédent pour le cas où l'on n'utilise pas le moteur 42 pour ouvrir la ridelle.

Selon une autre variante, les moyens 28 de réception du crochet 22, ou une partie du véhicule agencée au voisinage des moyens 28, portent des moyens de détection que le crochet est dans sa configuration de fonctionnement. Notamment, un capteur de contrainte peut être agencé sur une partie destinée à être en contact avec le crochet 22 une fois inséré dans les moyens 28, éventuellement sur une surface contre laquelle le crochet est en butée dans la direction X.

On notera que l'invention n'est pas limitée aux modes de réalisation précédemment décrits.

En particulier, la ridelle 12 peut être remplacée par tout autre ouvrant arrière susceptible d'être en contact avec un crochet de remorquage, en particulier à tout ouvrant arrière ayant une partie de faible hauteur sur le véhicule, tel qu'un hayon s'étendant sur toute la hauteur arrière du véhicule.

Par ailleurs, selon un mode de réalisation particulier, les moyens 32 peuvent être constitués par un capteur d'obstacle, de type PDC, destiné à détecter un obstacle quelconque placé derrière le véhicule. On peut également envisager que les moyens 32 peuvent bloquer l'ouverture de l'ouvrant arrière, non pas lorsque le crochet 22 est dans sa configuration de fonctionnement, mais plutôt lorsqu'un obstacle quelconque est dans une position susceptible d'abîmer l'ouvrant à la suite de son ouverture. On notera que ce mode de réalisation n'est pas forcément combiné à un blocage de l'ouvrant déclenché par un crochet en configuration de fonctionnement. En effet, on peut envisager, indépendamment de la prise ou compte ou non du crochet 22, de bloquer l'ouverture de l'ouvrant lorsqu'un obstacle situé à l'arrière du véhicule est à une distance et/ou une hauteur telle qu'il risque d'être en contact avec l'ouvrant ouvert ou en cours d'ouverture. Dans ce cas, le système de blocage et son fonctionnement sont similaires à tout ce qui est décrit ci-dessus, à la différence que les moyens assurent un blocage de l'ouvrant non pas lorsqu'un crochet est dans sa configuration de fonctionnement mais lorsqu'un obstacle est dans une position gênante. L'homme du métier saura adapter tout ce qui a été décrit dans la présente demande à une telle application.

On notera que les moyens de blocage 30, 40 peuvent aussi bien être motorisés que mécaniques. On peut en particulier disposer d'un moyen de blocage mécanique pour bloquer un ouvrant motorisé ou non. Des moyens de blocage motorisés sont particulièrement avantageux et faciles à mettre en oeuvre dans le cas où le véhicule dispose d'une serrure motorisée.

## Revendications

1. Système de blocage de l'ouverture d'un ouvrant arrière (12) de véhicule automobile, **caractérisé en ce que** l'ouvrant (12) comporte des moyens (18) d'absorption de chocs arrières du véhicule, par exemple une poutre de chocs, et le véhicule comporte un crochet de remorquage (22) agencé à l'arrière du véhicule, ce crochet (22) pouvant prendre une configuration de fonctionnement et une configuration de repos, le système comportant des moyens (30, 40) de blocage de l'ouvrant (12) lorsque le crochet (22) est dans sa configuration de fonctionnement.

2. Système selon la revendication 1, dans lequel les moyens de blocage (40) sont mécaniques.

3. Système selon la revendication 2, dans lequel les moyens de blocage comprennent une pièce (40) apte à former butée contre l'ouvrant (12) ou un élément rapporté sur l'ouvrant, pour empêcher l'ouvrant de prendre sa position ouverte.

4. Système selon l'une quelconque des revendications 1 à 3, dans lequel les moyens de blocage comprennent des moyens électroniques.

5. Système selon l'une quelconques des revendications 1 à 4, dans lequel les moyens de blocage (30, 40) agissent sur une serrure (34) de verrouillage de l'ouvrant (12).

6. Système selon l'une quelconque des revendications 1 à 5, comportant des moyens (32, 42) de détection que le crochet de remorquage (22) est dans sa configuration de fonctionnement.

7. Système selon la revendication 6, dans lequel les moyens de détection comprennent un capteur (32).

8. Système l'une quelconque des revendications 1 à 7, dans lequel le crochet (22) passe de sa configuration de fonctionnement à sa configuration de repos par escamotage.

9. Système selon l'une quelconque des revendications 1 à 8, comportant des moyens (36) anti-crochet, aptes à empêcher le crochet (22) de prendre sa configuration de fonctionnement lorsque l'ouvrant (12) n'est pas dans sa position fermée.

## Claims

1. System for blocking the opening of an automobile rear door (12), **characterised in that** the door (12) comprises means (18) for absorbing rear impacts to the vehicle, for example a bumper, and the vehicle comprises a tow hook (22) fitted at the rear of the vehicle, this hook (22) being able to take up an operating configuration and a rest configuration, the system comprising means (30, 40) for blocking the door (12) when the hook (22) is in its operating configuration.

2. System according to claim 1, wherein the blocking means (40) are mechanical.

3. System according to claim 2, wherein the blocking means comprise a part (40) which can act as a stop against the door (12) or an element added to the door, to prevent the door from taking up its opening position.

4. System according to any of claims 1 to 3, wherein the blocking means comprise electronic means.

5. System according to any of claims 1 to 4, wherein the blocking means (30, 40) act on a lock (34) for locking the door (12).

6. System according to any of claims 1 to 5, comprising means (32, 42) for detecting that the tow hook (22) is in its operating configuration.

7. System according to claim 6, wherein the detection means comprise a sensor (32).

8. System according to any of claims 1 to 7, wherein the hook (22) moves from its operating configuration to its rest configuration by retracting.

9. System according to any of claims 1 to 8, comprising anti-hook means (36), capable of preventing the hook (22) from taking up its operating configuration when the door (12) is not in its closed position.

## Patentansprüche

1. Öffnungsblockiersystem eines hinteren Öffnungselementes (12) eines Kraftfahrzeugs, **dadurch gekennzeichnet, dass** das Öffnungselement (12) Mittel (18) zum Absorbieren von hinteren Stößen des Fahrzeugs aufweist, zum Beispiel eine Stoßstange, und dass das Fahrzeug einen Schlepphaken (22) aufweist, der an der Rückseite des Fahrzeugs eingerichtet ist, wobei dieser Haken (22) eine Betriebskonfiguration und eine Ruhekonfiguration einnehmen kann, wobei das System Mittel (30, 40) zum Blockieren des Öffnungselementes (12) aufweist, wenn der Haken (22) in seiner Betriebskonfiguration ist.

2. System nach Anspruch 1, bei dem die Blockierungsmittel (40) mechanisch sind.

3. System nach Anspruch 2, bei dem die Blockierungsmittel ein Teil (40) aufweisen, das einen Anschlag gegen das Öffnungselement (12) oder ein Element, das an das Öffnungselement angebaut ist, bilden kann, um das Öffnungselement daran zu hindern, seine offene Position einzunehmen.

4. System nach einem der Ansprüche 1 bis 3, bei dem die Blockierungsmittel elektronische Mittel aufweisen.

5. System nach einem der Ansprüche 1 bis 4, bei dem die Blockierungsmittel (30, 40) auf ein Schloss (34) zum Verriegeln des Öffnungselementes (12) einwirken.

6. System nach einem der Ansprüche 1 bis 5, das Mittel (32, 42) aufweist, um zu erfassen, dass der Abschlepphaken (22) in seiner Betriebskonfiguration ist.

7. System nach Anspruch 6, bei dem die Erfassungsmittel einen Sensor (32) aufweisen.

8. System nach einem der Ansprüche 1 bis 7, bei dem der Haken (22) von seiner Betriebskonfiguration auf seine Ruhekonfiguration durch Einziehen übergeht.

9. System nach einem der Ansprüche 1 bis 8, das Hakenschutzmittel (36) aufweist, die den Haken (22) daran hindern können, seine Betriebskonfiguration einzunehmen, wenn das Öffnungselement (12) nicht in seiner geschlossenen Position ist.
